# EUROPEAN PATENT APPLICATION

(11) **EP 4 106 306 A1**
(43) Date of publication of application: **21.12.2022**
(21) Application number: 22178285.7
(22) Date of filing: 10.06.2022
(51) Int. Cl.: H04N 1/32, G06F 3/12

(54) **INFORMATION PROCESSING APPARATUS, CONTROL METHOD, AND CARRIER MEDIUM**

(30) Priority: 14.06.2021 JP 2021098897
(71) Applicant: Ricoh Company, Ltd., Tokyo 143-8555 (JP)
(72) Inventor: Yamawaki, Taku, Tokyo, 143/8555 (JP)
(74) Representative: SSM Sandmair

(57) **Abstract**

An information processing apparatus (11) for controlling output of information includes an acquisition means (80) to acquire a progress status of an output of information from a first apparatus instructed to perform the output of the information, a search means (81) to, in a case where occurrence of an abnormality in the first apparatus is detected, search a plurality of apparatuses communicating with the information processing apparatus (11) for a second apparatus to take over the output of the information in place of the first apparatus in accordance with a set condition, and a control means (82) to instruct the second apparatus to take over the output of the information based on the acquired progress status of the output of the information.

## Description

### BACKGROUND

### Technical Field

The present disclosure relates to an information processing apparatus for controlling output of information, a control method, and a carrier medium storing program codes for causing a computer to control the output of the information.

### Related Art

There is known a technique for, in a case where an abnormality occurs in an information processing apparatus during execution of a job of outputting information, causing another information processing apparatus to continuously execute the job of outputting the information. There is also known a technique relating to substitute printing for, in a case where an abnormality occurs in an image forming apparatus during execution of a job of printing, causing another image forming apparatus to continuously execute the job of the remaining printing (for example, see Japanese Unexamined Patent Application Publication No. 2015-203981 and Japanese Unexamined Patent Application Publication No. 2001-339561).

However, since an installed location of the other information processing apparatus that continuously executes the job of the remaining printing is not considered in the above-described technique, it is difficult to know a location where the remaining printing is output, resulting in a risk of information leakage.

### SUMMARY

An object of the present disclosure is to provide an information processing apparatus, a control method, and a carrier medium storing program codes that reduce the risk of information leakage.

In one aspect, an information processing apparatus for controlling output of information includes an acquisition means to acquire a progress status of an output of information from a first apparatus instructed to perform the output of the information, a search means to, in a case where occurrence of an abnormality in the first apparatus is detected, search a plurality of apparatuses communicating with the information processing apparatus for a second apparatus to take over the output of the information in place of the first apparatus in accordance with a set condition, and a control means to instruct the second apparatus to take over the output of the information based on the acquired progress status of the output of the information.

In another aspect, a method for controlling output of information, executed by an information processing apparatus, the method includes acquiring a progress status of an output of information from a first apparatus instructed to perform the output of the information, searching, in a case where occurrence of an abnormality in the first apparatus is detected, a plurality of apparatuses communicating with the information processing apparatus for a second apparatus to take over the output of the information in place of the first apparatus in accordance with a set condition, and instructing the second apparatus to take over the output of the information based on the acquired progress status of the output of the information.

In another aspect, a carrier medium carrying computer readable code for controlling a computer system to perform the above-described control method is provided.

According to the present disclosure, a risk of information leakage is reduced.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating an example of a configuration of an information processing system according to one embodiment of the present disclosure;
FIG. 2 is a block diagram illustrating an example of a hardware configuration of a cloud server according to one embodiment;
FIG. 3 is a block diagram illustrating an example of a hardware configuration of an image forming apparatus according to one embodiment;
FIG. 4 is a block diagram illustrating an example of a functional configuration of the cloud server according to one embodiment;
FIG. 5 is a block diagram illustrating an example of a functional configuration of the image forming apparatus according to one embodiment;
FIG. 6 is a sequence chart illustrating an example of normal printing according to one embodiment;
FIG. 7 is a sequence chart illustrating an example of substitute printing according to one embodiment;
FIG. 8 is a sequence chart illustrating an example of processing of registering an image forming apparatus according to one embodiment;
FIG. 9 is a sequence chart illustrating an example of processing from login to registration of a usage history according to one embodiment;
FIG. 10 is a schematic diagram illustrating a content of the could server displayed by browsers installed in information processing apparatuses according to one embodiment;
FIG. 11 is a view illustrating an example of a screen of a print initial setting according to one embodiment; and
FIG. 12 is a flowchart illustrating processing of the substitute printing according to one embodiment.

The accompanying drawings are intended to depict embodiments of the present invention and should not be interpreted to limit the scope thereof. The accompanying drawings are not to be considered as drawn to scale unless explicitly noted. Also, identical, or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

The present disclosure is described with reference to the following embodiments, but the present disclosure is not limited to the embodiments described herein.

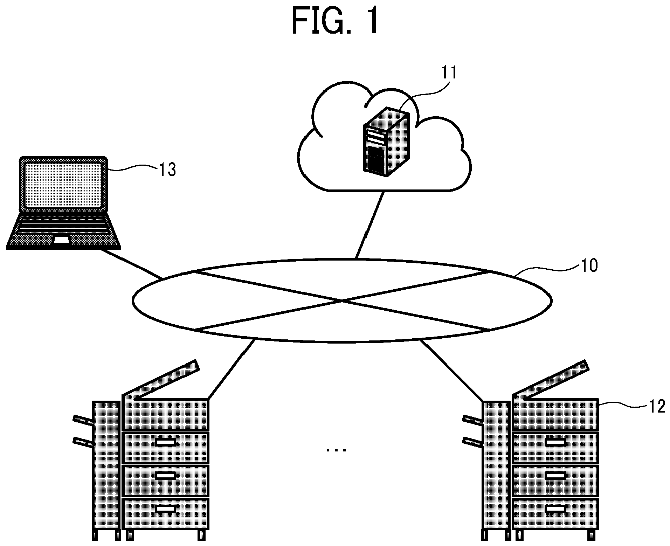

FIG. 1 is a schematic diagram illustrating an example of a configuration of an information processing system according to one embodiment of the present disclosure. The information processing system includes an information processing apparatus that provides a service such as output of information through a network 10 and a plurality of apparatuses that is managed by the information processing apparatus, and performs the output of the information. In the present embodiment, the information processing apparatus is described as a cloud server 11 and one of the plurality of apparatuses is described as an image forming apparatus 12 that performs output of information in the form of printing on a sheet. However, the information processing apparatus and the plurality of apparatuses are not limited thereto. The functions of the cloud server 11 are implemented by one information processing apparatus in this example, but may be implemented by two or more information processing apparatuses or a combination of an information processing apparatus and other apparatuses in another example. Examples of the image forming apparatus 12 include a multifunction peripheral (MFP) and a printer.

Note that the example of the plurality of apparatuses to perform output of information is not limited to the image forming apparatus 12, and may be any apparatus that outputs information such as a projector (PJ) or an interactive white board (IWB; an electronic white board having a blackboard function capable of mutual communication). The cloud server manages not only the apparatus that outputs information but also a scanner, a facsimile machine, an imaging device, and the like.

The information processing system may include a terminal device 13 that is used by a user and transmits a request for printing to the cloud server 11. The terminal device 13 may be any device that transmits print data and the request for printing to the cloud server 11. Examples of the terminal device 13 include a smartphone, a tablet terminal, a personal computer (PC), and a personal digital assistant (PDA). The information processing system includes one terminal device 13, but may include a plurality of terminal devices 13.

The network 10 is a local area network (LAN), a wide area network (WAN), the Internet, or the like, and may be either a wired network or a wireless network. In addition, the network 10 is implemented by a single network, or two or more networks that are connected to one another via a relay device such as a router.

The cloud server 11 receives print data as a job from the terminal device 13, accumulates the job, and requests one of a plurality of image forming apparatuses 12 managed by the cloud server 11 to execute the job. The cloud server 11 communicates with the image forming apparatus 12 that executes the job and acquires a progress status of the job as an output status to manage the job. The cloud server 11 receives a notification indicating completion of the execution of the job from the image forming apparatus 12 and deletes the job whose execution has been completed from jobs accumulated in the cloud server 11.

The image forming apparatus 12 receives the request for executing the job from the cloud server 11 and executes the job. The image forming apparatus 12 appropriately notifies the cloud server 11 of the progress status of the job. The image forming apparatus 12 notifies the cloud server 11 of an error in a case where an abnormality such as out-of-sheet, sheet jam, or toner discharge failure occurs in the image forming apparatus 12. In a case where an abnormality such as a segmentation fault of software installed in the image forming apparatus 12 or a disconnection from the network occurs, the cloud server 11 detects occurrence of an error. The segmentation fault of software is an error that occurs in a case where an access-prohibited area on a memory is accessed or a memory is accessed in violation of a rule defined for an individual area on the memory.

In the information processing system, the cloud server 11 requests one of the plurality of image forming apparatuses 12 to execute a job and causes the image forming apparatus 12 to start executing the job. In a case where the cloud server 11 detects an error that occurs in the image forming apparatus 12 during execution of the job, the cloud server 11 causes another image forming apparatus 12 to take over a remaining job. The cloud server 11 may only recognize occurrence of an error detected by the cloud server 11, or may recognize a notification of an error from the image forming apparatus 12 as occurrence of an error in addition to the occurrence of the error detected by the cloud server 11.

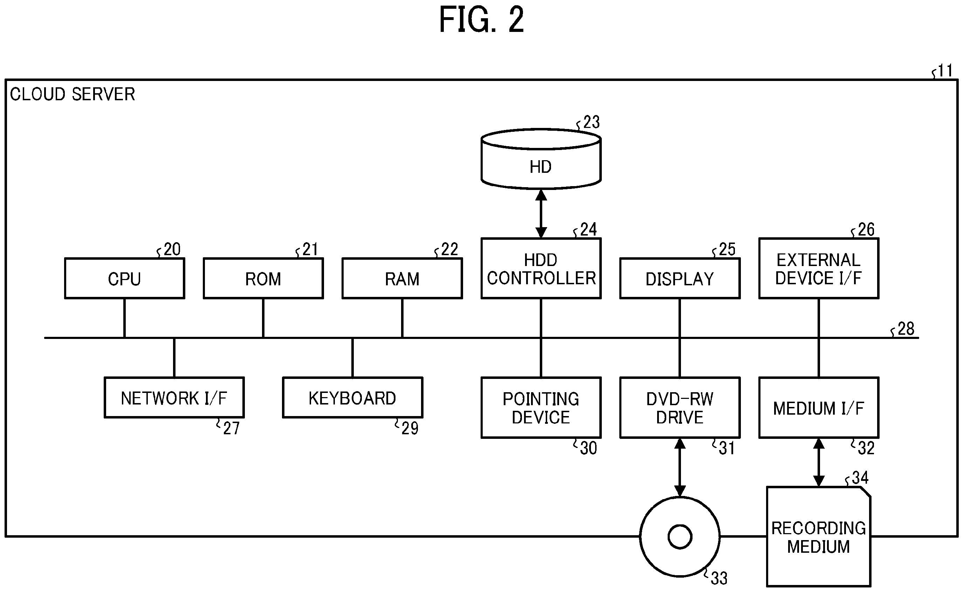

FIG. 2 is a block diagram illustrating a hardware configuration of a general-purpose computer that is an example of the cloud server 11 according to the present embodiment. A description is given of the cloud server 11 as a single information processing apparatus in this example. In another example, the cloud server 11 may be configured by two or more information processing apparatuses. The cloud server 11 includes a central processing unit (CPU) 20, a read only memory (ROM) 21, a random access memory (RAM) 22, a hard disk (HD) 23, and a hard disk drive (HDD) controller 24. The cloud server 11 also includes a display 25, an external device interface (I/F) 26, a network I/F 27, a data bus 28, a keyboard 29, a pointing device 30, a digital versatile disc rewritable (DVD-RW) drive 31, and a medium I/F 32.

The CPU 20 controls entire operation of the cloud server 11 and executes an operating system (OS) and various types of software. The ROM 21 stores a program such as an initial program loader (IPL) used for driving the CPU 20. The RAM 22 provides a work area for the CPU 20. The HD 23 stores the OS and various types of software to be executed by the CPU 20, various data, and the like. The HDD controller 24 controls reading and writing of various data from and to the HD 23 under control of the CPU 20.

The display 25 displays various information such as a cursor, a menu, a window, characters, or images. The external device I/F 26 is an interface for connection with various external devices. Examples of the external devices include, but not limited to, a universal serial bus (USB) memory and a printer. The network I/F 27 is an interface for data communication through the network 10. The data bus 28 is a bus that electrically connects each component such as the CPU 20.

The keyboard 29 is a kind of input device (input means) including a plurality of keys for inputting a character, a numerical value, various instructions, and the like. The pointing device 30 is a kind of input device (input means) that allows a user to select or execute various instructions, select an object for processing, and move a cursor being displayed. The DVD-RW drive 31 controls reading and writing of various data from and to a DVD-RW 33, which is an example of a removable recording medium. The removable recording medium is not limited to a DVD-RW and may be a digital versatile disc recordable (DVD-R) or the like. The medium I/F 32 controls reading and writing (storing) of data from and to a recording medium 34 such as a flash memory.

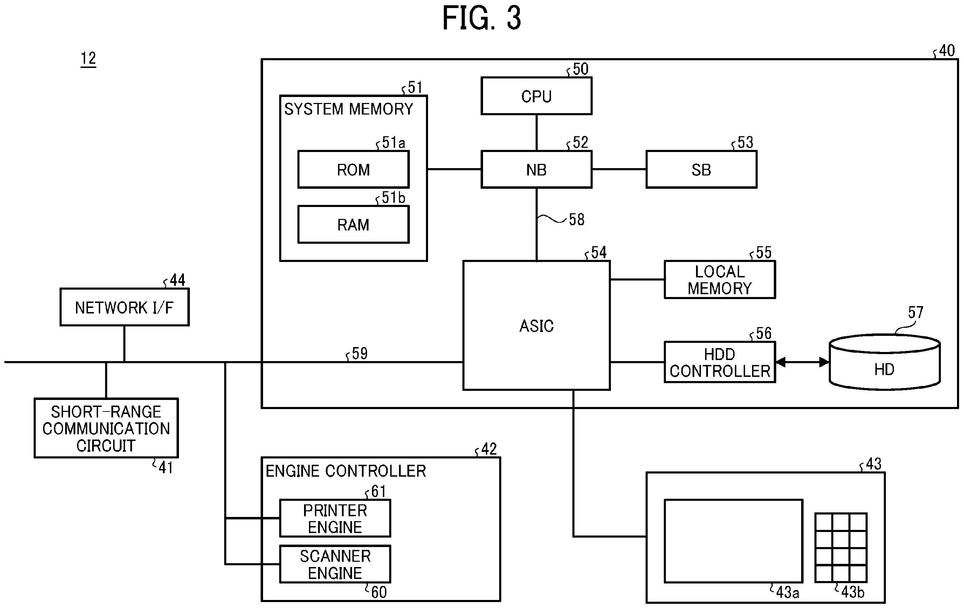

FIG. 3 is a block diagram illustrating an example of a hardware configuration of an MFP that is an example of the image forming apparatus 12 according to the present embodiment. The MFP includes a controller 40, a short-range communication circuit 41, an engine controller 42, a control panel 43, and a network I/F 44.

The controller 40 includes a CPU 50 as a main processor, a system memory 51, a north bridge (NB) 52, a south bridge (SB) 53, and an application specific integrated circuit (ASIC) 54. The controller 40 also includes a local memory 55 as a storage area, an HDD controller 56, and an HD 57 as a storage area. The NB 52 and the ASIC 54 are connected via an accelerated graphics port (AGP) bus 58.

The CPU 50 controls entire operation of the MFP. The NB 52 is a bridge for connecting the CPU 50 with the system memory 51, the SB 53, and the AGP bus 58. The NB 52 includes a memory controller for controlling reading and writing of various data from and to the system memory 51, a peripheral component interconnect (PCI) master, and an AGP target.

The system memory 51 includes a ROM 51a as a memory that stores a program and data for implementing various functions of the controller 40. The system memory 51 further includes a RAM 51b used as a memory to load the program and the data, or as a drawing memory that stores drawing data for printing. The program stored in the ROM 51a may be stored in any computer-readable recording medium, such as a compact disc-read only memory (CD-ROM), compact disc-recordable (CD-R), or digital versatile disc (DVD), in a file format installable or executable by a computer for distribution.

The SB 53 is a bridge for connecting the NB 52 to a PCI device and a peripheral device. The ASIC 54 is an integrated circuit (IC) for image processing applications including hardware elements for image processing and has a role of a bridge for connecting the AGP bus 58, a PCI bus 59, the HDD controller 56, and the local memory 55 one another. The ASIC 54 includes a PCI target, an AGP master, an arbiter (ARB) as a central processor of the ASIC 54, a memory controller to control the local memory 55, a plurality of direct memory access controllers (DMACs), and a PCI unit. The DMACs rotate image data by converting coordinates of the image data with, for example, a hardware logic. The PCI unit transfers data between a scanner engine 60 and a printer engine 61 via the PCI bus 59. The ASIC 54 may be connected to a universal serial bus (USB) interface, the Institute of Electrical and Electronics Engineers 1394 (IEEE1394) interface, or both.

The local memory 55 is a local memory used as a copy image buffer and a code buffer. The HD 57 is a storage for storing image data, font data used during printing, and forms. The HDD controller 56 controls reading and writing of various data from and to the HD 57 under control of the CPU 50. The AGP bus 58 is a bus interface for a graphics accelerator card, which has been proposed to accelerate graphics processing. Through directly accessing the system memory 51 by high-throughput, speed of the graphics accelerator card is improved.

The short-range communication circuit 41 is a communication circuit in compliance with the near field communication (NFC), BLUETOOTH, or the like. The engine controller 42 includes the scanner engine 60 and the printer engine 61. The control panel 43 includes a panel display 43a and an operation panel 43b. The panel display 43a is, for example, a touch panel that displays current settings or a selection screen and receives a user input. The operation panel 43b includes, for example, a numeric keypad and a start key. The numeric keypad receives assigned values of image forming parameters such as an image density parameter. The start key receives an instruction to start copying, for example. The controller 40 controls entire operation of the MFP. For example, the controller 40 controls rendering, communication, or user inputs from the control panel 43. The scanner engine 60 and the printer engine 61 include an image processor and perform various image processing, such as error diffusion or gamma conversion.

The MFP may sequentially switch to select a document server function, a copying function, a printing function, and a facsimile communication function by an application switching key of the control panel 43. The document server function functions to store document data to be printed in the HD 57 and allow a user to designate a combination or processing of the document data to be printed later. When the document server function is selected, a document server mode is set, when the copying function is selected, a copy mode is set, when the printing function is selected, a printer mode is set, and when the facsimile communication function is selected, a facsimile mode is set.

The network I/F 44 is an interface for data communication through the network 10. The short-range communication circuit 41 and the network I/F 44 are electrically connected to the ASIC 54 via the PCI bus 59.

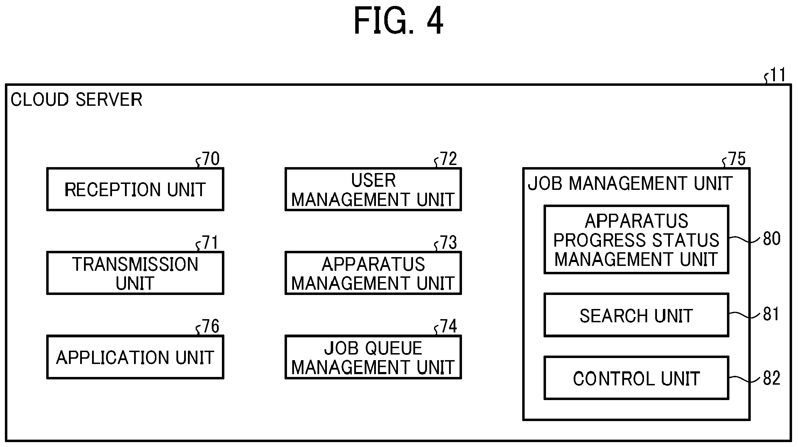

FIG. 4 is a block diagram illustrating an example of a functional configuration of the cloud server 11 according to the present embodiment. Each function of the cloud server 11 may be implemented by one processing circuit or a plurality of processing circuits. The processing circuit or the plurality of processing circuits of the cloud server 11 includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules arranged to perform the recited functions.

The cloud server 11 includes, for implementing each function of the cloud server 11, a reception unit 70, a transmission unit 71, a user management unit (example of user management means) 72, an apparatus management unit (example of management means) 73, a job queue management unit 74, a job management unit 75, and an application unit (example of notification means) 76.

A user uses the terminal device 13 to transmit print data and a request for executing a job to the cloud server 11. The print data includes document data to be printed and print setting information indicating a range to be printed, a sheet size, and the like.

The reception unit 70 of the cloud server 11 receives the request for executing the job from one or more terminal devices 13. The reception unit 70 receives the request for executing the job and sequentially causes the job queue management unit 74 to accumulate the job. The job queue management unit 74 accumulates the job, a job name for identifying the job, a date and time when the job is received, and the like in association with one another. The job queue management unit 74 holds information indicating priority set for the job and holds information indicating a status of the job. Examples of the information indicating the priority set for the job are "HIGH" indicating that the job is executed prior to other jobs and "ORDINARY" indicating that the job is executed in an order of being accumulated. The priority of a job may be set according to a user who requests the job, a content of the job, or the like. Examples of the information indicating the status of the job are "STANDBY" indicating that the job is on standby, "SUSPENDED" indicating that the job is suspended, and "IN PROGRESS" indicating that the job is being executed.

In a case where the image forming apparatus 12 completes the execution of the job, the job queue management unit 74 deletes the job whose execution has been completed from jobs accumulated in the job queue management unit 74 and requests, in accordance with the priority set for each of the accumulated jobs, the job management unit 75 to execute a next job. The job queue management unit 74 may delete the job whose execution has been completed after requesting the execution of the next job.

The job management unit 75 includes an apparatus progress status management unit (example of acquisition means) 80, a search unit (example of search means) 81, and a control unit (example of control means) 82. The control unit 82 receives the request for executing the job from the job queue management unit 74 and interprets a content of the job. The control unit 82 decomposes the content of the job into processes that can be interpreted and executed by the image forming apparatus 12, instructs the image forming apparatus 12 to execute the job via the transmission unit 71, and controls the image forming apparatus 12. Specifically, exchange of information between the cloud server 11 and other apparatuses such as the image forming apparatus 12 is performed via the reception unit 70 and the transmission unit 71. However, the description is simplified as if the control unit 82 or the like directly exchanges the information with the other apparatuses in the present embodiment.

The apparatus progress status management unit 80 acquires the progress status of the job from the image forming apparatus 12 instructed to execute the job and stores the acquired progress status, the job name for identifying the job, and the like in association with one another. The progress status is information indicating how many pages of printing have been completed in a case where a document having a plurality of pages is printed. The cloud server 11 may periodically inquire the image forming apparatus 12 of the progress status and the image forming apparatus 12 transmits the progress status as a response to the inquiry to the cloud server 11, or the image forming apparatus 12 may periodically notify the cloud server 11 of the progress status.

The job queue management unit 74 receives a notification indicating that the execution of the job has been completed from the image forming apparatus 12 and deletes the job whose execution has been completed from jobs accumulated in the job queue management unit 74.

The user management unit 72 manages information of a user (user information) who uses the cloud server 11. The user information includes a user list, settings of a user, a usage history of the information processing system and the image forming apparatus 12 of the user, and the like. The user list includes login information such as a user name, a user identifier (ID), and a password.

The apparatus management unit 73 manages information on an apparatus (apparatus information) used by the cloud server 11 to provide a service. The apparatus is not limited to the image forming apparatus 12, and may be a scanner or the like. The apparatus information includes an apparatus list, settings of an apparatus, a state of the apparatus, information on a location where the apparatuses is installed (installed location information), and the like. The apparatus list includes an apparatus name and connection information, such as an internet protocol (IP) address, used for communication. Examples of the state of the apparatus are "NORMAL," "ABNORMAL," "POWER-ON," "POWER-OFF," and the like. The installed location information may indicate a location represented by the latitude and longitude, or may indicate the location represented by a floor of a building or by a direction.

The application unit 76 holds various types of setting information for using each function provided by the cloud server 11 and provides screens for input and display. Examples of the function provided by the cloud server 11 include a function to register an apparatus and a function to set settings of the information processing system in addition to a scanning function, the copying function, the printing function, and the facsimile communication function. One of the various types of setting information is information of a print initial setting to set whether to perform substitute printing. The application unit 76 provides screens for registering information of a job and receiving inputs to the information of the job, and stores the information of the job. The application unit 76 provides the above-described screens using a browser (user interface) or various types of applications.

In a case where a job is printing according to print data including document data of a plurality of pages, the image forming apparatus 12 reports completion each time one page has been printed. For example, the image forming apparatus 12 reports that "the printing of the seventh page has been completed." In a case where the printing of the last page of the job has been completed, the image forming apparatus 12 reports completion of the job. The image forming apparatus 12 can also reports an error such as out-of-sheet.

In a case where occurrence of an error is detected in the image forming apparatus 12, the search unit 81 searches for another image forming apparatus 12 to take over printing of the remaining pages (a substitute image forming apparatus to perform substitute printing) in place of the image forming apparatus 12 having the error. The search unit 81 searches for the substitute image forming apparatus 12 to perform the substitute printing in accordance with conditions set in the print initial setting stored in the application unit 76. In searching for the substitute image forming apparatus 12 to perform the substitute printing, the search unit 81 performs a search using the installed location information or the like managed by the apparatus management unit 73. Based on the progress status managed by the apparatus progress status management unit 80, the search unit 81 identifies a page to start printing and notifies the control unit 82 of the found image forming apparatus 12 and the identified page to start printing.

The search unit 81 may use a search algorithm in searching for the substitute image forming apparatus to perform the substitute printing. Examples of the search algorithm are a linear search method and a binary search method. The linear search method is checking the installed location information or the like of each image forming apparatus one by one in an order of registration and searching for an image forming apparatus that matches the conditions. The binary search method is rearranging in advance the installed location information or the like of each image forming apparatus by floor or the like and searching for an image forming apparatus that matches the conditions. These search algorithms are set by a user in a setting unit that is provided separately and may be used in searching for the substitute image forming apparatus to perform the substitute printing.

The search algorithm ranks and outputs a search result according to an installed location of an image forming apparatus, a frequency of use of the image forming apparatus, or the like. The search algorithm allows a search in consideration of not only the installed location or the frequency of use but also the contents set by the user in the print settings in terms of a sheet size, a capability of double-sided printing, or the like. The search unit 81 selects an image forming apparatus with the highest rank as an substitute image forming apparatus to perform the substitute printing from the image forming apparatuses ranked in the search result.

Using the apparatus information managed by the apparatus management unit 73, the control unit 82 transmits the printing data from the page to start printing to the image forming apparatus found by the search unit 81 and instructs the found image forming apparatus to execute the remaining job.

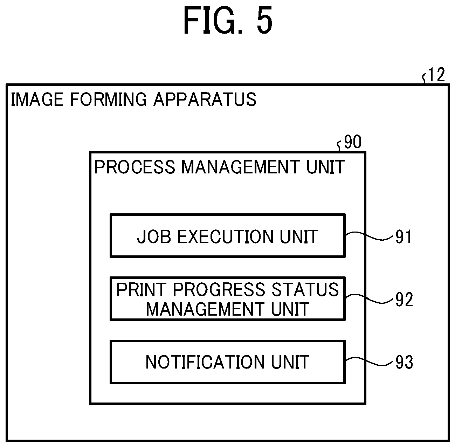

FIG. 5 is a block diagram illustrating an example of a functional configuration of the image forming apparatus 12 according to the present embodiment. Similarly to the cloud server 11, each function of the image forming apparatus 12 may be implemented by one processing circuit or a plurality of processing circuits. The processing circuit or the plurality of processing circuits of the image forming apparatus 12 includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules arranged to perform the recited functions.

The image forming apparatus 12 includes, for implementing each function of the image forming apparatus 12, a process management unit 90 that includes a job execution unit 91, a print progress status management unit 92, and a notification unit 93.

The job execution unit 91 executes a job instructed to be executed by the cloud server 11. The job execution unit 91 executes a job of printing according to print data including document data of a plurality of pages and notifies the print progress status management unit 92 of completion each time one page has been printed. In response to receiving the notification from the job execution unit 91, the print progress status management unit 92 updates the progress status indicating how many pages of the job have been completed. The print progress status management unit 92 updates the progress status each time one page has been printed. The progress status is managed in association with a job name for identifying a job. The notification unit 93 notifies the cloud server 11 of the progress status managed by the print progress status management unit 92. For example, the notification unit 93 notifies the cloud server 11 of an updated progress status each time the progress status is updated by the print progress status management unit 92.

The job execution unit 91 detects an abnormality detectable by the image forming apparatus 12, such as out-of-sheet. The notification unit 93 notifies the cloud server 11 of the abnormality detected by the job execution unit 91 as an error.

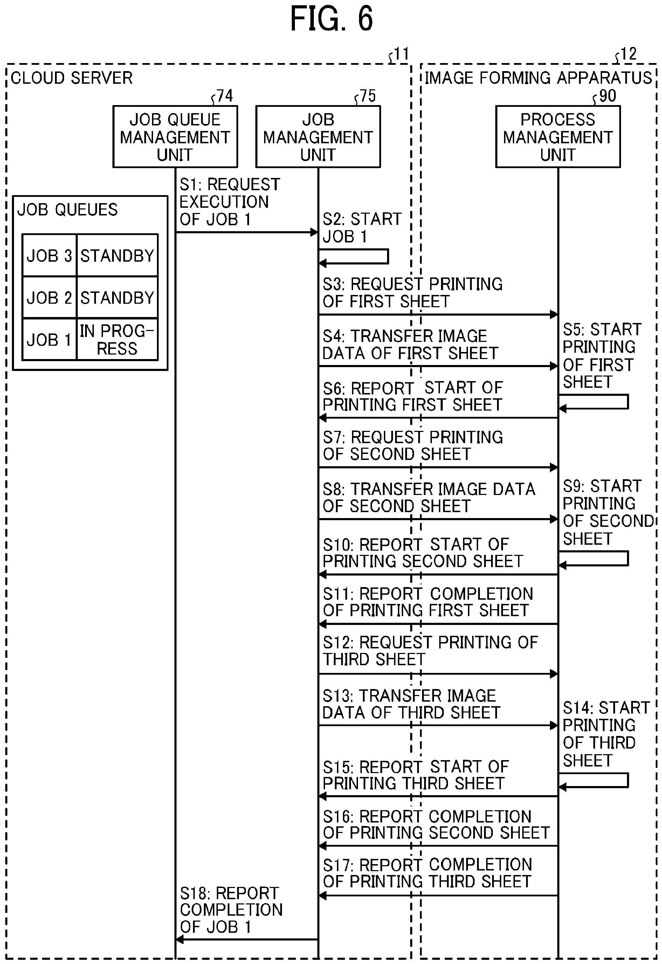

A description is now given of a flow of processing of normal printing using the cloud server 11 with reference to FIG. 6. The normal printing is processing of printing free from an error during execution of a job.

In response to receiving a job from the terminal device 13 used by a user, the cloud server 11 causes the job queue management unit 74 to accumulate the job and the job queue management unit 74 to manage the status of the job. At a stage in which the job is accumulated, the status of the job is indicated as "STANDBY" For example, in a case where the image forming apparatus 12 completes a job in progress and notifies the cloud server 11 of completion of the job, the job queue management unit 74 changes the status of a job to be executed next by the image forming apparatus 12 among jobs accumulated in the job queue management unit 74 from "STANDBY" to "IN PROGRESS." In an example illustrated in FIG. 6, while three jobs (jobs 1 to 3) are accumulated, the status of the next job (job 1) is changed to "IN PROGRESS" and the statuses of the other jobs (jobs 2 and 3) are maintained in "STANDBY"

The job queue management unit 74 requests the job management unit 75 to execute the job 1 (S1). The job management unit 75 starts executing the job 1 requested to be executed (S2). The job management unit 75 interprets that a content of the job 1 is printing according to print data including document data of three pages, decomposes the content of the job 1 into an instruction that can be processed by the image forming apparatus 12, and requests the image forming apparatus 12 to perform printing in an order from the first page (first sheet).

The job management unit 75 transmits a request for printing the first sheet (S3) and transfers image data of the first sheet (S4) to the image forming apparatus 12. The data to be printed is described as image data in this example, but is not limited thereto. In another example, the data to be printed may be text data, graphic data, photograph data, or data obtained by combining two or more of the above-described data.

In response to receiving the request for printing the first sheet and the image data of the first sheet from the cloud server 11, the process management unit 90 of the image forming apparatus 12 starts printing the first sheet (S5). The process management unit 90 notifies the cloud server 11 of a progress status indicating that printing of the first sheet has started (S6). Since the image forming apparatus 12 transmits such a notification to the cloud server 11 each time the progress status changes, the cloud server 11 can manage the job 1 in progress and update the progress status of the job 1 to the latest status.

The job management unit 75 transmits a request for printing the second sheet (S7) and transfers image data of the second sheet (S8) to the image forming apparatus 12 before the printing of the first sheet has been completed in order to save time in executing a job.

In response to receiving the request for printing the second sheet and the image data of the second sheet from the cloud server 11, the process management unit 90 starts printing the second sheet (S9) as soon as the printing of the first sheet has been completed. The process management unit 90 notifies the cloud server 11 of a progress status indicating that printing of the second sheet has started (S10) and notifies the cloud server 11 of completion of printing the first sheet (S11).

Before the printing of the second sheet is completed, the job management unit 75 transmits a request for printing the third sheet (S12) and transfers image data of the third sheet (S13) to the image forming apparatus 12.

In response to receiving the request for printing the third sheet and the image data of the third sheet from the cloud server 11, the process management unit 90 starts printing the third sheet (S14) as soon as the printing of the second sheet has been completed. The process management unit 90 notifies the cloud server 11 of a progress status indicating that printing of the third sheet has started (S15) and notifies the cloud server 11 of completion of printing the second sheet (S16). Thereafter, when the printing of the third sheet has been completed, the process management unit 90 notifies the cloud server 11 of completion of printing the third sheet (S17).

In response to receiving the notification indicating that the printing of the third sheet has been completed from the image forming apparatus 12, the job management unit 75 recognizes that the execution of the job 1 has been completed and notifies the job queue management unit 74 of completion of the job 1 (S18). In response to receiving the notification of completion of the job 1 from the job management unit 75, the job queue management unit 74 deletes the job 1 from jobs accumulated in the job queue management unit 74.

In the example illustrated in FIG. 6, the cloud server 11 repeats transferring image data of one sheet and the image forming apparatus 12 repeats printing one sheet. However, in another example, the cloud server 11 may collectively transfer image data of all the pages in advance and the image forming apparatus 12 notifies the cloud server 11 of a progress status each time the printing of one sheet has been completed.

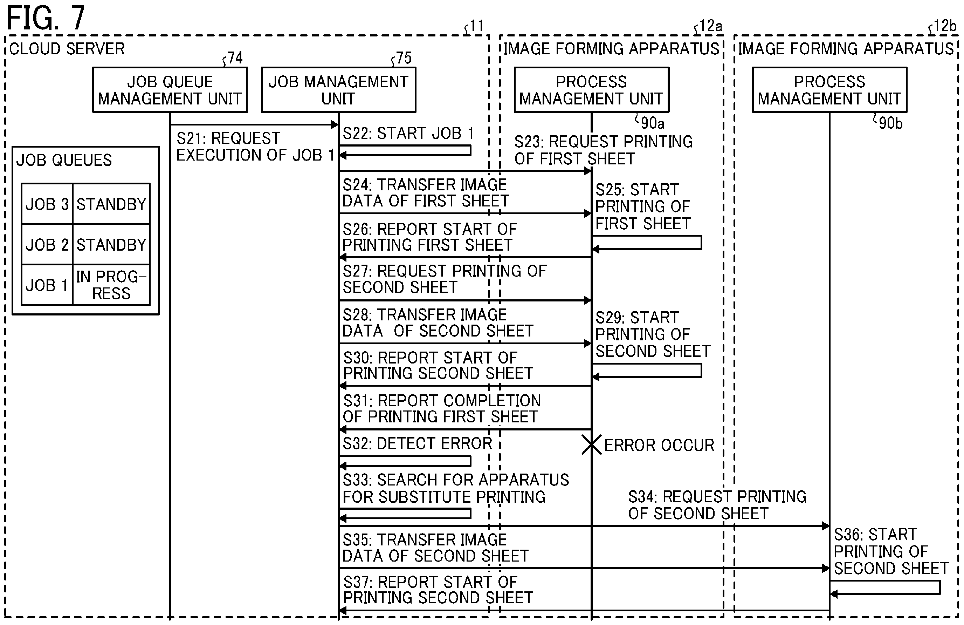

A description is now given of a flow of processing of printing when an error occurs during execution of a job using the cloud server 11 with reference to FIG. 7. In this example, it is assumed that the error occurs after the printing of the first sheet has been completed. In FIG. 7, the image forming apparatus 12 that executes a job before the error occurs is referred to as an "image forming apparatus 12a" and another image forming apparatus 12 to perform the substitute printing after the error occurs is referred to as an "image forming apparatus 12b." Similarly, the process management units 90 of the image forming apparatuses 12a and 12b are referred to as "process management units 90a and 90b," respectively.

In response to receiving a job from the terminal device 13 used by a user, the cloud server 11 stores the job in the job queue management unit 74 that manages a status of the job. In the example illustrated in FIG. 7, while three jobs (jobs 1 to 3) are accumulated, the status of the next job (job 1) is changed to "IN PROGRESS" and the statuses of the other jobs (jobs 2 and 3) are maintained in "STANDBY"

The job queue management unit 74 requests the job management unit 75 to execute the job 1 (S21) and the job management unit 75 starts executing the job 1 requested to be executed (S22). The job management unit 75 interprets that a content of the job 1 is printing according to print data including document data of three pages, decomposes the content of the job 1 into an instruction that can be processed by the image forming apparatus 12a, and requests the image forming apparatus 12a to execute printing in an order from the first page (first sheet).

The job management unit 75 transmits a request for printing the first sheet (S23) and transfers image data of the first sheet (S24) to the image forming apparatus 12a.

In response to receiving the request for printing the first sheet and the image data of the first sheet from the cloud server 11, the process management unit 90a of the image forming apparatus 12a starts printing the first sheet (S25). The process management unit 90a notifies the cloud server 11 of a progress status indicating that printing of the first sheet has started (S26).

Before the printing of the first sheet has been completed, the job management unit 75 transmits a request for printing the second sheet (S27) and transfers image data of the second sheet (S28) to the image forming apparatus 12a.

In response to receiving the request for printing the second sheet and the image data of the second sheet from the cloud server 11, the process management unit 90a starts printing the second sheet (S29) as soon as the printing of the first sheet has been completed. The process management unit 90a notifies the cloud server 11 of a progress status indicating that printing of the second sheet has started (S30) and notifies the cloud server 11 of completion of printing the first sheet (S31).

After the image forming apparatus 12a starts printing the second sheet, an error occurs due to disconnection of the network 10 or the like. The cloud server 11 periodically transmits a connection check to the image forming apparatus 12a to confirm that the network connection between the cloud server 11 and the image forming apparatus 12a is maintained, and receives a response from the image forming apparatus 12a. In a case where the cloud server 11 does not receive any response from the image forming apparatus 12a within a certain period of time after transmitting the connection check to the image forming apparatus 12a, the cloud server 11 detects that the error such as network disconnection has occurred (S32).

In a case where the occurrence of the error is detected, the job management unit 75 searches for the image forming apparatus 12b to take over the remaining printing in place of the image forming apparatus 12a (S33). In searching, the job management unit 75 refers to the setting information of the print initial setting managed by the application unit 76. At this time, the job management unit 75 may refer to the usage history information managed by the user management unit 72, the installed location information managed by the apparatus management unit 73, and the like as necessary. In addition, the job management unit 75 identifies a page to start printing for continuously executing the job. In the example illustrated in FIG. 7, the job management unit 75 identifies the second page to start printing since the job management unit 75 has received the notification of completion of printing the first sheet, manages the notification as the progress status, and has not received any notification of completion of printing the second or subsequent sheets.

The job management unit 75 transmits a request for printing the page identified to start, that is, a request for printing the second sheet (S34), and transfers image data of the second sheet (S35) to the found image forming apparatus 12b.

In response to receiving the request for printing the second sheet and the image data of the second sheet from the cloud server 11, the process management unit 90b of the image forming apparatus 12b starts printing the second sheet (S36). The process management unit 90b notifies the cloud server 11 of a progress status indicating that printing of the second sheet has started (S37). Since the subsequent processing is substantially the same as the processing illustrated in FIG. 6, description thereof is omitted.

An image forming apparatus to perform the substitute printing is not selected at random from the image forming apparatuses 12. If a user does not know which image forming apparatus is used to perform the substitute printing, the user fails to immediately go to an installed location of the image forming apparatus to perform the substitute printing and receive a printed matter output from the image forming apparatus to perform the substitute printing. In such a case, another person may view a content of the output printed matter or may take away the output printed matter together with a printed matter operated to be output by that person. In particular, in a case of printing a confidential document, this leads to information leakage and loss of the printed matter increases damage. For this reason, it is necessary for a user to be able to control a method of searching for an image forming apparatus to perform the substitute printing.

In order for the user to control the method of searching for the image forming apparatus to perform the substitute printing, the following three methods are considered. Note that these three methods are merely examples, and any other search method controllable by the user may be used.

The first method is a search method based on an installed location of an image forming apparatus. The second method is a search method based on a frequency of use of an image forming apparatus. The third method is a search method to search for a specific image forming apparatus.

An example of the first method is a method of searching, for an image forming apparatus to perform the substitute printing, image forming apparatuses on the same floor where an image forming apparatus having an error is located. If the image forming apparatus to perform the substitute printing is located on the same floor where the image forming apparatus having an error is located, the number of candidate image forming apparatuses to perform the substitute printing is narrowed down and a user does not fail to find an image forming apparatus performing output. In this example, although a location on the same floor is used as a key for searching for an image forming apparatus to perform the substitute printing, this is merely an example for grouping image forming apparatuses and narrowing down the number of the candidate image forming apparatuses. In a case where one floor is vast in area, the one floor may be further finely divided for finely grouping the image forming apparatuses.

The apparatus management unit 73 of the cloud server 11 manages the installed location information of an individual image forming apparatus in the information processing system. Thus, the search unit 81 refers to the installed location information of the image forming apparatus having the error to search for another image forming apparatus on the same floor where the image forming apparatus having the error is located. The search is performed in consideration of the contents set in the print settings as well as the installed location. The found image forming apparatuses are ranked in an ascending order of a distance from the image forming apparatus having the error. The ranking based on the distance is an example. The ranking may be performed in a descending order of a frequency of use of the individual image forming apparatus with reference to the usage history managed by the user management unit 72.

In registering an image forming apparatus in the cloud server 11, the installed location information of the image forming apparatus is also registered in the cloud server 11 in order to implement the first method. In a case where an installed location of an image forming apparatus changes physically, the installed location information can be changed or deleted.

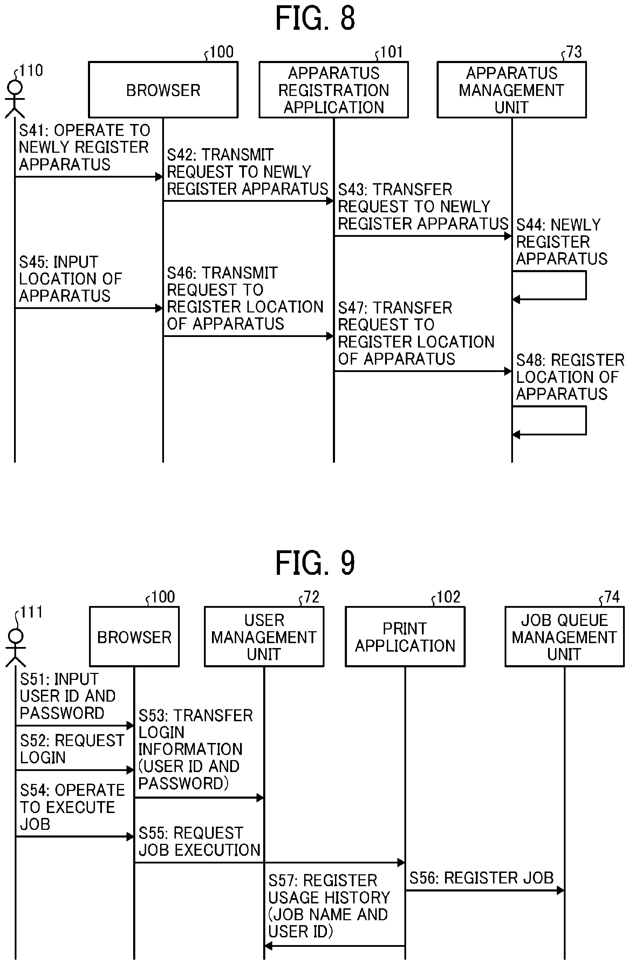

FIG. 8 is a sequence chart illustrating an example of processing of registering an image forming apparatus in the cloud server 11 according to the present embodiment. The application unit 76 includes a browser 100 serving as a user interface (UI) and an apparatus registration application 101 for registering the image forming apparatus. An administrator 110 operates the browser 100 provided by the cloud server 11 to display a registration screen, inputs information relating to the image forming apparatus to be registered on the registration screen using an input device such as a keyboard, and instructs the browser 100 to newly register the image forming apparatus (S41). The information relating to the image forming apparatus includes the apparatus name, the connection information, and the like.

The browser 100 transfers the input information to the apparatus registration application 101 and requests the apparatus registration application 101 to newly register the image forming apparatus (S42). The apparatus registration application 101 transfers the input information to the apparatus management unit 73 and requests the apparatus management unit 73 to newly register the image forming apparatus (S43). The apparatus management unit 73 adds the input information to the apparatus list to register the image forming apparatus (S44).

Following inputting the information relating to the image forming apparatus, the administrator 110 further inputs the installed location information of the image forming apparatus on the registration screen and instructs the browser 100 to register the installed location information of the image forming apparatus (S45). In this example, registration of the installed location information is instructed after the input information relating to the image forming apparatus is added to the apparatus list, but registration of the installed location information may be instructed during the processing of S42 to S44.

The browser 100 transfers the installed location information to the apparatus registration application 101 and requests the apparatus registration application 101 to register the installed location information (S46). The apparatus registration application 101 transfers the installed location information to the apparatus management unit 73 and requests the apparatus management unit 73 to register the installed location information (S47). The apparatus managing unit 73 adds the installed location information to the apparatus list to register the installed location information (S48).

The second method is a method of searching, for an image forming apparatus to perform the substitute printing, image forming apparatuses frequently used by a user. If an image forming apparatus frequently used by the user performs the substitute printing, the user using the information processing system easily finds which image forming apparatus is performing the substitute printing. The second method is implemented by using the usage history of an image forming apparatus of the user. The frequency of use is determined to be high in a case where the number of times of use of an image forming apparatus is equal to or greater than a threshold value which, for example, is predetermined by the administrator 110. The user management unit 72 of the cloud server 11 holds and updates the usage history of an image forming apparatus of the user. The usage history of the image forming apparatus of the user is accumulated by registering an apparatus name, a date and time, and the like in association with a user name of the user each time the image forming apparatus is used.

The search is performed in consideration of the contents set in the print setting information as well as the frequency of use. The found image forming apparatuses are ranked in descending order of the frequency of use. The ranking based on the frequency of use is an example. The ranking may be performed in an ascending order of a distance from the image forming apparatus having an error with reference to the apparatus information managed by the apparatus management unit 73.

FIG. 9 is a sequence chart illustrating an example of processing from login to registration of a usage history in executing a job according to the present embodiment. A user 111 operates the browser 100 provided by the cloud server 11 to display a login screen, inputs login information to the login screen (S51), and requests the browser 100 to perform login (S52). The login information includes the user ID and the password. The login information may be biometric information such as a fingerprint instead of the user ID and the password. The browser 100 transfers the login information to the user management unit 72 and requests the user management unit 72 to perform the login (S53). The user management unit 72 performs login processing using the user information held and managed by the user management unit 72. The user management unit 72 instructs the browser 100 to display a result of the login processing. In a case where the login is successful, the user 111 can use the information processing system to perform the subsequent processing.

In a case where the login is successful, the user 111 operates the browser 100 to display a document to be printed, determines the print settings, and instructs the browser 100 to execute a job (S54). The browser 100 requests the print application unit 102 to execute the job (S55). The print application unit 102 registers the job in the job queue management unit 74 and causes the job queue management unit 74 to accumulate the job (S56). The print application unit 102 requests the user management unit 72 to register the user ID, the job name, and the like in association with one another as a usage history (S57). The user management unit 72 registers and manages the usage history.

The third method is a method of searching for a specific image forming apparatus to perform the substitute printing. The specific image forming apparatus is determined and registered by the user 111 in advance. Since the image forming apparatus to perform the substitute printing is known to the user 111 in advance, the user 111 can easily find the image forming apparatus performing the substitute printing and collect the output printed matter.

In a case where an error occurs in an image forming apparatus during execution of a job, one of the above-described three methods is used to immediately search for another image forming apparatus to perform the substitute printing and the found image forming apparatus is caused to continuously execute the job in progress. In the present embodiment, immediately searching for another image forming apparatus to continuously execute a job in progress as described above is referred to as "immediate execution." In the immediate execution, if the image forming apparatus to continuously execute the job in progress is an image forming apparatus frequently used by the user 111, the user 111 easily finds a location where the output is performed.

However, candidates for the image forming apparatus to perform the substitute printing may include an image forming apparatus that is not frequently used by the user 111. In a case where the image forming apparatus not frequently used is found and the immediate execution is performed by the found image forming apparatus, the user 111 fails to find a location where the output is performed, resulting in loss of the printed matter.

For this reason, it is desirable to present candidates for an image forming apparatus to perform the substitute printing to the user 111 as a result of a search at occurrence of an error and allow the user 111 to select a timing to output the taken-over job or an image forming apparatus to take over the job. In the present embodiment, allowing a user to select a timing or an image forming apparatus as described above is referred to as "selection upon occurrence." In a case where the first method is used, an image forming apparatus that is on the same floor but is not frequently used by the user 111 might be found, resulting in an inconvenience that the user 111 fails to find the image forming apparatus. To avoid such an inconvenience, the user 111 can set the selection upon occurrence to confirm an image forming apparatus to take over printing. In the second and third methods, an image forming apparatus frequently used by the user 111 is found, and thus such an inconvenience does not occur.

The number of candidates for an image forming apparatus to perform the substitute printing may be one or more. In a case where the number of candidates is more than one, a certain number of candidates may be selected from the highest rank of the ranking, and the selected image forming apparatuses are used as candidates for the image forming apparatus to perform the substitute printing. The application unit 76 also functions as a notification unit. The application unit 76 notifies the user of the found image forming apparatuses as candidates and displays the candidates on a screen for selecting an image forming apparatus.

A description is now given of the "selection upon occurrence" in detail. The function of substitute printing starts from an image forming apparatus in which an error has occurred. Accordingly, in a case where a timing of the substitute printing is set to the selection upon occurrence, the timing of the substitute printing is to be selected in a control panel of the image forming apparatus having the error.

A control panel of an image forming apparatus (the image forming apparatus 12) typically displays a content generated by a main body of the image forming apparatus. Consequently, in a case where a fatal error occurs in the main body of the image forming apparatus, the control panel fails to display the content, and thus a user fails to operate the control panel. A fatal error is, for example, a segmentation fault that is a specific error occurring during execution of software. If the user cannot operate the control panel, the user cannot select an image forming apparatus to perform the substitute printing.

However, in this information processing system, not the content generated by the main body of the image forming apparatus but a content on the cloud server 11 is displayed by a browser installed in the control panel of the image forming apparatus. Therefore, any apparatus that implements a browser such as the terminal device 13 or the like other than the control panel of the image forming apparatus can display the content and receive operations of the user without being affected by the error occurred in the image forming apparatus. The cloud server 11 generates a content (screen information) indicating the found candidates for the image forming apparatus to perform the substitute printing, and transmits, to the terminal device 13 or the like, the content to be displayed on a screen of the terminal device 13 or the like for a selection by the user. For the purpose of generating a content, the cloud server 11 includes a generation unit.

The candidates for the image forming apparatus to perform the substitute printing may be displayed only by the apparatus name. However, for example, two or more image forming apparatuses having the same apparatus name are not distinguished from each other. To avoid such an inconvenience, the candidates for the image forming apparatus to perform the substitute printing may be displayed by the apparatus name, the installed location information, and the like together. Specific examples of the content to be displayed are "Apparatus A 5F East" and "Apparatus B 6F Meeting Room C Nearby." These are merely examples, and other information may be included in the content to be displayed.

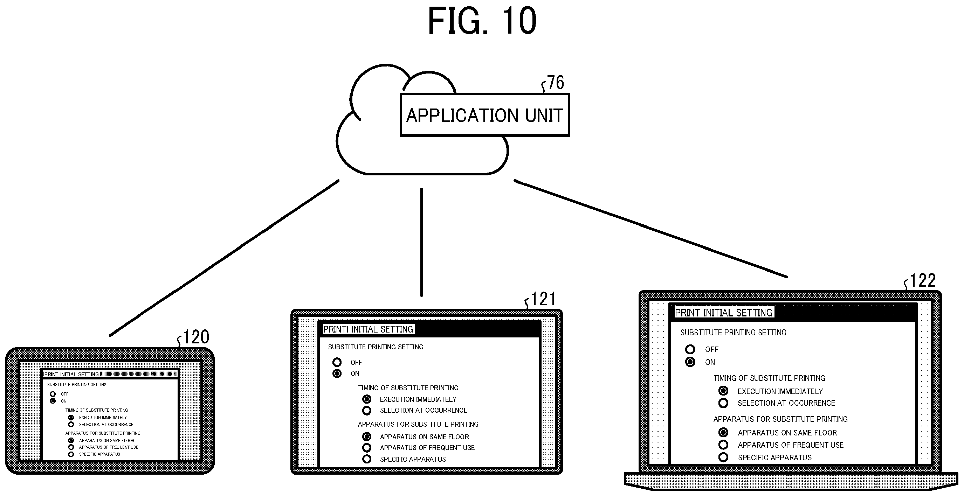

FIG. 10 is a schematic diagram illustrating a content of the cloud server 11 displayed by browsers installed in a control panel 120 of the image forming apparatus 12, a tablet 121 that is one example of the terminal device 13, and a PC 122 that is another example of the terminal device 13, according to the present embodiment. The application unit 76 of the cloud server 11 displays a content corresponding to a function to be provided and receives information to be input. In the example illustrated in FIG. 10, a screen of the print initial setting is displayed as a content requested by each browser of the control panel 120, the tablet 121, and the PC 122. The screen of the print initial setting is a screen for setting the selection upon occurrence.

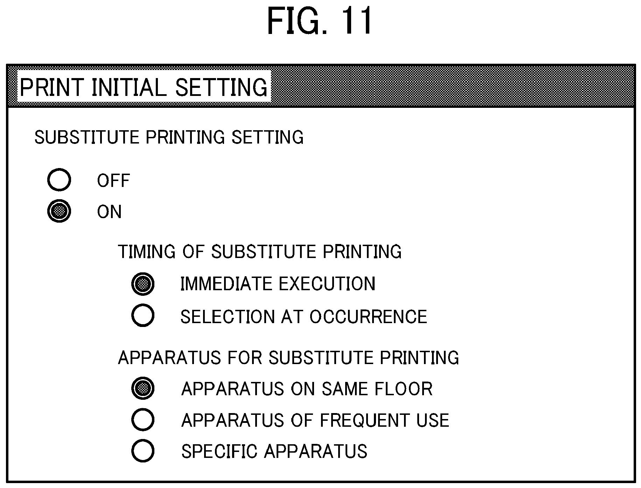

FIG. 11 is a view illustrating an example of the screen of the print initial setting according to the present embodiment. In the print initial setting, the user 111 can set the timing of the substitute printing in advance. The contents set in the print initial setting are held as settings of a print application for implementing a printing function that is one of the functions provided by the application unit 76.

The print initial setting includes a setting item for setting whether or not to perform the substitute printing. The print initial setting further includes setting items for selecting a timing of the substitute printing and a method of selecting an image forming apparatus to perform the substitute printing in a case where the substitute printing is performed. In the setting item for selecting the timing of the substitute printing, the "IMMEDIATE EXECUTION" and the "SELECTION UPON OCCURRENCE" are displayed in a selectable manner. In the setting item for selecting the method of selecting an image forming apparatus to perform the substitute printing, an "APPARATUS ON SAME FLOOR," an "APPARATUS OF FREQUENT USE," and a "SPECIFIC APPARATUS" are displayed in a selectable manner for selecting one of the three methods.

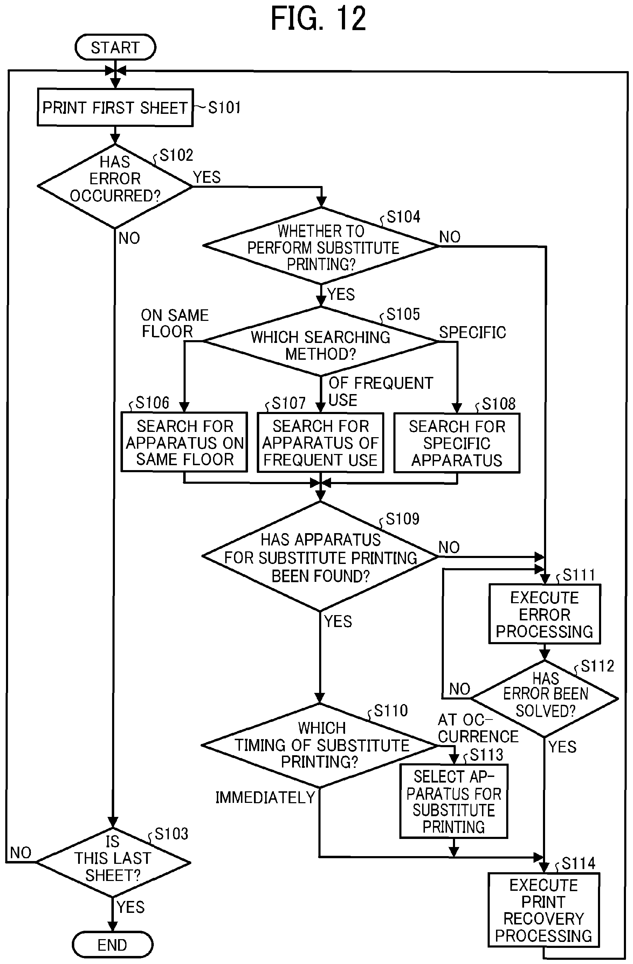

FIG. 12 is a flowchart illustrating processing of executing a job in accordance with conditions set in the print initial setting illustrated in FIG. 11, according to the present embodiment. In response to receiving a request for executing a job from the job queue management unit 74, the job management unit 75 starts executing the job. In S101, the job management unit 75 transmits a request for printing one sheet and image data of the one sheet to the image forming apparatus 12 and causes the image forming apparatus 12 to perform printing the one sheet. In S102, the job management unit 75 determines whether an error has occurred in the image forming apparatus 12. In a case where the error has not occurred in the image forming apparatus 12 (NO in S102), the process proceeds to S103. In S103, the job management unit 75 determines whether the printed sheet is the last page. In a case where the printed sheet is not the last page (NO in S103), the process returns to S101. In S101, the job management unit 75 transmits a request for printing a next sheet and image data of the next sheet to the image forming apparatus 12 and causes the image forming apparatus 12 to perform printing the next sheet.

In a case where the error has occurred (YES in S102), the process proceeds to S104. In S104, the job management unit 75 determines whether to perform the substitute printing in accordance with the conditions set in the print initial setting. In a case where the substitute printing is set to be performed (YES in S104), the process proceeds to S105. In S105, the job management unit 75 determines a method of searching for an image forming apparatus to perform the substitute printing. In a case where the method of searching for an image forming apparatus on the same floor is selected ("ON SAME FLOOR" in S105), the process proceeds to S106. In S106, the job management unit 75 searches for another image forming apparatus on the same floor where the image forming apparatus having the error is located. In a case where the method of searching for an image forming apparatus of frequent use has is selected ("OF FREQUENT USE" in S105), the process proceeds to S107. In S107, the job management unit 75 searches for another image forming apparatus frequently used. In a case where the method of searching for a specific image forming apparatus is selected ("SPECIFIC" in S105), the process proceeds to S108. In S108, the job management unit 75 searches for the specific image forming apparatus.

In S109, the job management unit 75 determines whether an image forming apparatus has been found by any of the searching methods in S106 to S108. If the image forming apparatus has been found (YES in S109), the process proceeds to S110. In S110, the job management unit 75 determines whether the timing of the substitute printing is set to the immediate execution or the selection upon occurrence.

In a case where the substitute printing is not set to be performed (NO in S104) or no image forming apparatus has been found (NO in S109), the process proceeds to S111. In S111, the job management unit 75 executes error processing. After executing the error processing, the job management unit 75 determines whether the error is solved in S112. In a case where the error is not solved, the process returns to S111. In S111, the job management unit 75 executes the error processing again. Note that the job management unit 75 may stop executing the job in a case where an image forming apparatus to perform the substitute printing is not found and the error is unlikely to be solved. The suspended job may be deleted from the job queue management unit 74.

In a case where the job management unit 75 determines that the timing of the substitute printing is set to the selection upon occurrence ("AT OCCURRENCE" in S110), the process proceeds to S113. In S113, a user selects an image forming apparatus to perform the substitute printing, and the process proceeds to S114. In S114, as print recovery processing, the job management unit 75 transmits a request for printing a page to start the substitute printing and image data of the page to the selected image forming apparatus to perform the substitute printing and causes the selected image forming apparatus to start the substitute printing, and then the process returns to S101.

In a case where the job management unit 75 determines that the printed sheet is the last page (YES in S103), the process ends. Here, the job management unit 75 finishes the execution of the job requested by the job queue management unit 74. In a case where the execution of one job has been completed, the job queue management unit 74 requests the job management unit 75 to execute a next job accumulated in the job queue management unit 74, and the process starts from S101 again.

Since a user can designate an image forming apparatus to perform the substitute printing or candidates for the image forming apparatus to perform the substitute printing, an output printed matter is reliably collected and the printed matter is less likely to be lost.

In a case where an image forming apparatus to perform the substitute printing is selected, the selected image forming apparatus may be executing another job. In such a case, the substitute printing is performed after the execution of the job in progress. In a case where a plurality of candidates for an image forming apparatus to perform the substitute printing is found, an image forming apparatus that is not in execution of a job may be selected from the plurality of found candidates for the image forming apparatus to perform the substitute printing.

The above-described embodiment is illustrative and does not limit the present invention. The above-described embodiment may be modified within a range conceivable by those skilled in the art. The modification includes addition of another element and change or deletion of one of the above-described elements. Such modifications are within the scope of the present disclosure as long as the actions and effects of the present disclosure are provided.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

One aspect of the present disclosure provides an information processing system including an information processing apparatus for controlling output of information, an acquisition means to acquire a progress status of an output of information from a first apparatus instructed to perform the output of the information, a search means to, in a case where occurrence of an abnormality in the first apparatus is detected, search a plurality of apparatuses communicating with the information processing apparatus for a second apparatus to take over the output of the information in place of the first apparatus in accordance with a set condition, and a control means to instruct the second apparatus to take over the output of the information based on the acquired progress status of the output of the information.

## Claims

1. An information processing apparatus (11) for controlling output of information, comprising:
an acquisition means (80) configured to acquire a progress status of an output of information from a first apparatus instructed to perform the output of the information;
a search means (81) configured to, in a case where occurrence of an abnormality in the first apparatus is detected, search a plurality of apparatuses communicating with the information processing apparatus (11) for a second apparatus to take over the output of the information in place of the first apparatus in accordance with a set condition; and
a control means (82) configured to instruct the second apparatus to take over the output of the information based on the acquired progress status of the output of the information.

2. The information processing apparatus (11) according to claim 1, further comprising a management means (73) configured to store installed location information of each of the plurality of apparatuses, wherein:
the search means (81) searches for the second apparatus based on a location where the first apparatus is installed by using the installed location information of each of the apparatuses.

3. The information processing apparatus according to claim 1, further comprising a user management means (72) configured to store a usage history of each of the plurality of apparatuses used by a user, wherein:
the search means (81) searches for the second apparatus based on a frequency of use of the user by using the usage history of each of the plurality of apparatuses used by the user.

4. The information processing apparatus according to claim 2 or 3, wherein:
the search means (81) is further configured to set an algorithm selected by a user and search for the second apparatus in accordance with the algorithm.

5. The information processing apparatus according to any one of claims 1 to 4, wherein:
the control means (82) instructs the second apparatus to perform the output of the information at a timing set in advance.

6. The information processing apparatus according to claim 5, wherein:
in response to obtaining the second apparatus by the search means (81), the control means (82) instructs the second apparatus to perform the output of the information.

7. The information processing apparatus according to claim 5, further comprising a notification means (76) configured to display, on a screen, candidates obtained by the search means (81) for the second apparatus, wherein:
based on selection of one candidate from the candidates for the second apparatus, the control means (82) instructs the second apparatus to take over the output of the information.

8. The information processing apparatus according to claim 7, wherein:
the notification means (76) is further configured to generate screen information for selecting a candidate for the second apparatus and transmit, to a terminal device used by a user, the screen information to be displayed by a browser installed in the terminal device.

9. A method for controlling output of information, executed by an information processing apparatus, the method comprising:
acquiring (S6, S10, S11, S15, S16, S17, S26, S30, S31) a progress status of an output of information from a first apparatus instructed to perform the output of the information;
searching (S106, S107, S108), in a case where occurrence of an abnormality in the first apparatus is detected, a plurality of apparatuses communicating with the information processing apparatus (11) for a second apparatus to take over the output of the information in place of the first apparatus in accordance with a set condition; and
instructing (S114) the second apparatus to take over the output of the information based on the acquired progress status of the output of the information.

10. A carrier medium carrying computer-readable code for controlling a computer system to perform the control method of claim 9.
